# EUROPEAN PATENT SPECIFICATION

(11) **EP 2 519 037 B1**
(45) Date of publication and mention of the grant of the patent: **01.04.2015**
(21) Application number: 10850978.7
(22) Date of filing: 04.08.2010
(51) Int. Cl.: H04W 4/06, H04W 8/22, H04W 40/24, H04L 29/08, H04W 4/02

(54) **METHOD AND NETWORK FOR SHARING SENSOR DATA AMONG MOBILE TERMINALS**
VERFAHREN UND NETZWERK ZUR GEMEINSAMEN NUTZUNG VON SENSORDATEN MIT VERSCHIEDENEN ENDGERÄTEN
PROCÉDÉ ET RÉSEAU DE PARTAGE DE DONNÉES DE CAPTEUR PARMI DES TERMINAUX MOBILES

(30) Priority: 07.05.2010 CN 201010168429
(43) Date of publication of application: 31.10.2012
(73) Proprietor: ZTE Corporation, Shenzhen, Guangdong 518057 (CN)
(72) Inventor: FENG, Yuao, Shenzhen Guangdong 518057 (CN)
(74) Representative: Kling, Simone
(86) International application number: PCT/CN2010/075694
(87) International publication number: WO 2011/137609

(56) References cited:
- WO-A1-2010/035025
- WO-A2-2006/127840
- CN-A- 1 877 475
- CN-A- 101 039 321
- CN-A- 101 252 538
- US-A1- 2008 263 196
- US-A1- 2009 201 850
- US-A1- 2009 327 478

## Description

### TECHNICAL FIELD

The present disclosure relates to a data sharing technology of a mobile terminal, and in particular to a method and a network for sharing sensor data among mobile terminals.

### BACKGROUND

With a development of a radio communication technology, particularly a widespread application of a mobile terminal (such as a cell phone and the like) in life and work, people have a higher demand on internal needs. Generally, people expect that a mobile terminal has powerful functions, high intelligence, more humanized and strong applicability.

At present, some sensors such as an acceleration sensor, a temperature sensor, a magnetic field sensor, an optical sensor, etc., are generally integrated in a more popular smart phone such as an Android mobile phone, an Apple mobile phone, a Windows mobile phone and the like. A mobile terminal based on these peripheral sensor devices are more convenient to control, have a more comprehensive application and can meet a high demand of people on mobile terminals.

However, the application of these peripheral sensor devices can only be embodied on a single mobile terminal at present and can not realize sharing among a plurality of mobile terminals; in other words, sensor data of these peripheral sensors can only be used on a mobile terminal (for example, a cell phone) to which the peripheral sensors belong, and can not be used on other mobile terminals, that is, the sensor data can not be shared among a plurality of mobile terminals.

Document US 2009/327478 A1 discloses a system that facilitates selecting a sensor from amongst a plurality of sensors from which to request data is described, wherein the system includes a receiver component that receives a value of information for data that corresponds to a segment of a phenomenon model that models a phenomenon, the receiver component also receives user-defined preferences regarding sharing data from at least one sensor.

### SUMMARY

In view of the problem above, the main purpose of the present disclosure is to provide a method and a network for sharing sensor data among mobile terminals, so that sensor data can be shared among a plurality of mobile terminals.

In order to realize the purpose above, the technical solution of the present disclosure is realized as follows.

The present disclosure provides a method for sharing sensor data among mobile terminals, wherein the mobile terminal build a network for sharing sensor data in advance, the method further includes that:
when any mobile terminal in the network for sharing sensor data needs sensor data not owned by itself, the mobile terminal sends a request message to a mobile terminal owning the sensor data needed by the mobile terminal according to routing table information and a sensor resource list which are currently stored in the mobile terminal itself; and
according to the request message received, the mobile terminal which receives the request returns the sensor data needed to the mobile terminal which sends the request message,
wherein a mobile terminal initiating an access request be taken as a host mobile terminal while a mobile terminal receiving the access request be taken as a slave mobile terminal;
that a mobile terminal builds a network for sharing sensor data include that:
   the host mobile terminal sends an access request to all slave mobile terminals; and the slave mobile terminals return access response messages to the host mobile terminal after receiving the access request;
   the host mobile terminal builds a network for sharing sensor data according to the access response messages returned by the slave mobile terminals and generates routing table information, and meanwhile broadcasts the generated routing table information to all slave mobile terminals in the built network;
   the host mobile terminal sends all slave mobile terminals a command to report all sensor resource information; after receiving the command, the slave mobile terminals report all sensor resource information of themselves to the host mobile terminal;
   according to sensor resource information of the host mobile terminal itself and the received sensor resource information reported by all slave mobile terminals, the host mobile terminal generates a sensor resource list and broadcasts the sensor resource list to all slave mobile terminals.

In the solution above, that any mobile terminal which needs sensor data not owned by itself sends a request message to a mobile terminal owning the sensor data needed by the mobile terminal may include that:
the mobile terminal which sends the request message sends the request message to a nearest mobile terminal which receives the request message to request the nearest mobile terminal to return requested sensor data;
when sensor data of the nearest mobile terminal which receives the request message is unusable, the mobile terminal which sends the request message finds a second nearest mobile terminal according to the routing table information and sends a request message to the second nearest mobile terminal found out, by such analogy, until finds out a mobile terminal which can respond to a request message from the mobile terminal which sends the request message.

In the solution above, a distance between the mobile terminal which sends the request message and the mobile terminal which receives the request message may be determined by time needed by an information interaction between the mobile terminals.

In the solution above, the method may further include that:
when the mobile terminal which sends the request message does not need sensor data acquired from the mobile terminal which receives the request message, and other mobile terminals do not share the sensor data acquired by the mobile terminal which sends the request message from the mobile terminal which receives the request message, the sensor data acquired by the mobile terminal which sends the request from the mobile terminal which receives the request message is deleted and deleted sensor resource information is reported to the host mobile terminal;
the host mobile terminal updates the sensor resource list of itself and broadcasts an updated sensor resource list to all slave mobile terminals.

In the solution above, when the mobile terminal which sends the request message is taken as a slave mobile terminal, the method may further include that:
after receiving the returned sensor data, the mobile terminal which sends the request message reports newly acquired sensor resource information to the host mobile terminal;
the host mobile terminal updates the sensor resource list of itself and broadcasts the updated sensor resource list to all slave mobile terminals.

In the solution above, when the mobile terminal which sends the request message is taken as a host mobile terminal, the method may further include that:
the host mobile terminal updates the sensor resource list of itself according to newly acquired sensor resource information, and broadcasts the updated sensor resource list to all slave mobile terminals.

In the solution above, the method may further include that:
the host mobile terminal broadcasts a network removal message to all slave mobile terminals;
after determining there is no service to be processed, slave mobile terminals which receive the network removal message return removal confirmation messages to the host mobile terminal;
the host mobile terminal removes the network after receiving removal confirmation messages returned by all slave mobile terminals and determining completion of service processing of the host mobile terminal itself; and
each mobile terminal deletes routing table information and a sensor resource list stored in the each mobile terminal.
The present disclosure further provides a network for sharing sensor data among mobile terminals, which includes more than one first mobile terminal and more than one second mobile terminal, wherein
the first mobile terminal is configured, according to routing table information and a sensor resource list which are currently stored in the first mobile terminal itself, to send a request message to the second mobile terminal; and
the second mobile terminal is configured, after receiving the request message sent by the first mobile terminal, to return needed sensor data to the first mobile terminal according to the request message received,
wherein all the first mobile terminals and all the second mobile terminals are slave mobile terminals, the network further include:
   a host mobile terminal configured to send an access request to the slave mobile terminals; after receiving an access response from the slave mobile terminals, to build a network for sharing sensor data and broadcast generated routing table information to the slave mobile terminals;
   the first mobile terminal is further configured, after receiving the access request, to return an access response message to the host mobile terminal and receive the routing table information broadcasted by the host mobile terminal; after receiving the routing table information, to return an acknowledgement message to the host mobile terminal; and
   the second mobile terminal is further configured, after receiving the access request, to return an access response message to the host mobile terminal and receive the routing table information broadcasted by the host mobile terminal; after receiving the routing table information, to return an acknowledgement message to the host mobile terminal.

In the solution above, the host mobile terminal may be further configured, after receiving the acknowledgement message from the slave mobile terminals, to send the slave mobile terminals a command to report all sensor resource information, and receive all sensor resource information reported by the slave mobile terminals; after receiving all sensor resource information reported by the slave mobile terminals, to generate a sensor resource list and broadcast the sensor resource list to the slave mobile terminals;
the first mobile terminal is further configured to receive the command to report all sensor resource information from the host mobile terminal; after receiving the command, to report all sensor resource information of itself to the host mobile terminal; and further to receive the sensor resource list broadcasted by the host mobile terminal; and
the second mobile terminal is further configured to receive the command to report all sensor resource information from the host mobile terminal; after receiving the command, to report all sensor resource information of itself to the host mobile terminal; and further to receive the sensor resource list broadcasted by the host mobile terminal.

In the solution above, the host mobile terminal may be configured to receive newly acquired, and/or deleted sensor resource information reported by the first mobile terminal; after receiving the sensor resource information, to update the sensor resource list of itself and then broadcasting the updated sensor resource list to all slave mobile terminals;
the first mobile terminal is further configured to report newly acquired, and/or deleted sensor resource information to the host mobile terminal and receive the updated sensor resource list broadcasted by the host mobile terminal; and
the second mobile terminal is further configured to receive the updated sensor resource list broadcasted by the host mobile terminal.

In the method and the network for sharing sensor data among mobile terminals provided by the present disclosure, when any mobile terminal in the network for sharing sensor data needs sensor data not owned by itself, the mobile terminal sends a request message to a mobile terminal owning the sensor data needed by the mobile terminal according to routing table information and a sensor resource list which are currently stored in the mobile terminal itself; and the mobile terminal which receives the request message returns the sensor data needed to the mobile terminal which sends the request message according to the received request message.. In this way, sharing of sensor data among a plurality of mobile terminals can be realized.

In addition, a host mobile terminal is set in the entire network for sharing sensor data among mobile terminals; any slave mobile terminal, after receiving sensor data of other mobile terminals, reports newly added sensor resource information to the host mobile terminal; and the host mobile terminal updates a sensor resource list according to the reported newly added sensor resource information and broadcasts the updated sensor resource list to all slave mobile terminals; in this way, the mobile terminal can send a request message to a nearest mobile terminal owning the sensor data needed by the mobile terminal according to routing table information and the updated sensor resource list, such that the mobile terminal can quickly acquire the needed sensor data.

### BRIEF DESCRIPTION OF THE DRAWINGS

Fig. 1 shows a flowchart of a method for building by mobile terminals a network for sharing sensor data according to the disclosure;
Fig. 2 shows a flowchart of a method for sharing sensor data among mobile terminals according to the disclosure;
Fig. 3 shows a flowchart of a method after a mobile terminal receives returned sensor data according to the disclosure;
Fig. 4 shows a flowchart of a method for sharing sensor data among mobile terminals according to one embodiment of the disclosure;
Fig. 5 shows a topological diagram of a network built according to one embodiment of the disclosure; and
Fig. 6 shows a structure diagram of a network for sharing sensor data among mobile terminals according to the disclosure.

### DETAILED DESCRIPTION

The basic idea of the present disclosure is that: when any mobile terminal in the network for sharing sensor data needs sensor data not owned by itself, the mobile terminal sends a request message to a mobile terminal owning the sensor data needed by the mobile terminal according to routing table information and a sensor resource list which are currently stored in the mobile terminal itself; and the mobile terminal which receives the request message returns the sensor data needed to the mobile terminal which sends the request message according to the request message received

For example, in a small community such as a skyscraper, two mobile terminals both of which have an acceleration sensor function or a temperature sensor application function can measure a height difference between different floors according to a gravity acceleration value or a temperature difference value. Mobile terminals with different sensors can realize sharing of sensor data through a network, thus applications based on these sensors can play a role in more extensive fields. In this way, a plurality of mobile terminals with the same sensor application can share different sensor data, thus totally different experience is brought to users.

The present disclosure will be further illustrated in detail in combination with the accompanying drawings and specific embodiments hereinafter.

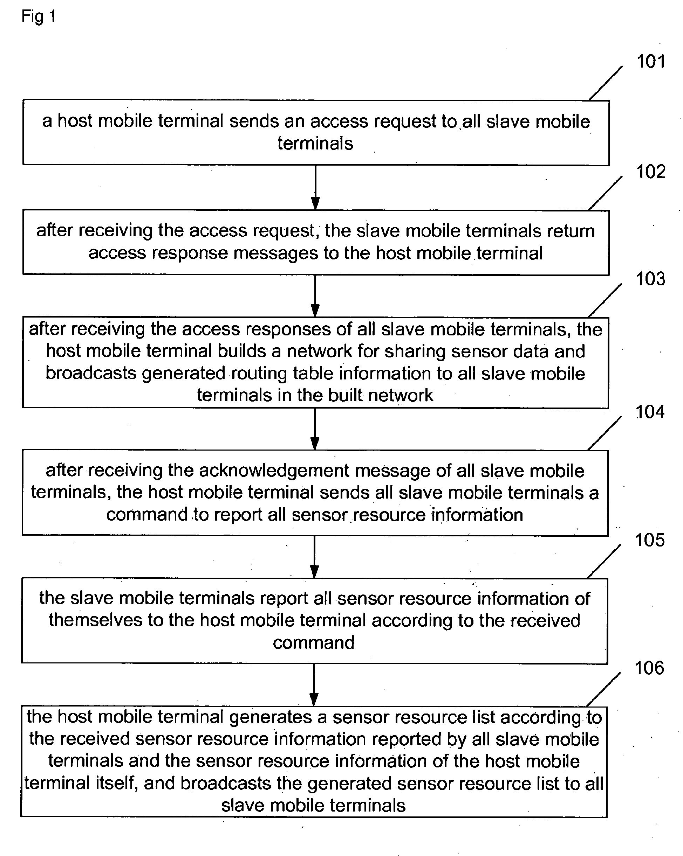

A method for sharing sensor data among mobile terminals realized according to the disclosure includes a process of building a network for sharing sensor data, and the method for building a network is as shown in Fig. 1, which includes the following steps.

Step 101: a host mobile terminal sends an access request to all slave mobile terminals;
wherein, a mobile terminal which initiates an access request, generates routing table information, updates a sensor resource list, broadcasts a sensor resource list and routing table information is called a host mobile terminal; and a mobile terminal which receives an access request, reports its own sensor resource information, receives a sensor resource list and routing table information is called a slave mobile terminal;
here, the host mobile terminal can be any one mobile terminal; the host mobile terminal initiates an access request, and a mobile terminal which receives the access request is called the slave mobile terminal; in a network, there is only one host mobile terminal, however, there may be a plurality of slave mobile terminals;
before the host mobile terminal sends an access request to all slave mobile terminals, all mobile terminals perform information interaction to determine the host mobile terminal and the number of the accessed slave mobile terminals; generally, during information interaction, one mobile terminal can randomly select a mobile terminal as a host mobile terminal and sends an election message including the selected host mobile terminal to other mobile terminals; after receiving the election message, each of the other mobile terminals send an election approved message to the mobile terminal; after receiving the election approved message, the mobile terminal sends the selected host mobile terminal a message that the latter mobile terminal is selected as the host mobile terminal; after receiving the message that the latter mobile terminal is selected as the host mobile terminal, the host mobile terminal sends a message of access or not to all mobile terminals participating the information interaction; after receiving the message of access or not, the mobile terminals return access confirmation messages or not-access confirmation messages to the host mobile terminal, then the host mobile terminal confirms the number of the accessed slave mobile terminals according to the returned messages; and, after determining the number of the accessed slave mobile terminals, the host mobile terminal sends an access request to all accessed slave mobile terminals.
Step 102: after receiving the access request, the slave mobile terminals return access response messages to the host mobile terminal;
here, the host mobile terminal determines distances between the host mobile terminal itself and the respective slave mobile terminals according to duration of access response time returned by the respective slave mobile terminals; similarly, message interaction are performed between the respective slave mobile terminals, and distances between the respective slave mobile terminals are determined according to time intervals of interaction; generally, one slave mobile terminal, after sending information to another slave mobile terminal, records a timestamp of sending information, and one slave mobile terminal, after receiving a response from another slave mobile terminal, also records a timestamp of receiving response; accordingly, the slave mobile terminal sending information confirms the time interval of interaction;
the access response message includes a distance between each of the slave mobile terminals and another one of the slave mobile terminals.
Step 103: after receiving the access responses of all slave mobile terminals, the host mobile terminal builds a network for sharing sensor data and broadcasts generated routing table information to all slave mobile terminals in the built network;
here, after receiving the access responses of the slave mobile terminals, the host mobile terminal builds a network for sharing sensor data according to distances between the host mobile terminal itself and the respective slave mobile terminals and distances between the respective slave mobile terminals, in combination with a rule that a mobile terminal can only be connected with another two mobile terminals and a shortest-route match algorithm; wherein, one mobile terminal can only be connected with another two mobile terminals, such that connection and the maintenance of the network is more convenient; in an actual application, one mobile terminal can also be connected with a plurality of mobile terminals;
a network for sharing sensor data can be built by way of a radio network or a wired network; when a wired network is used, a corresponding standard of the wired network is applied, for example, if a Public Switched Telephone Network (PSTN) is used, a related standard of the PSTN is applied; if a Next Generation Network (NGN) is used, a related standard of the NGN is applied; here, the wired network can be various wired networks; when a radio network is used, a corresponding standard of the radio network is applied, for example, if a Wireless Local Area Network (WLAN) is used, a related 802.1 x standard of the WLAN is applied; if a Bluetooth is used, a related standard of the Bluetooth is applied; if a Worldwide Interoperability for Microwave Access (WiMax) is used, a related standard of the WiMax is applied; if a 3rd-Generation (3G) mobile network is used, a related standard of the 3G mobile network is applied; here, the radio network can be various radio networks;
the routing table information includes: connection information of a mobile terminal and a weight value of a connection route, wherein the longer the distance of the connection route is, the larger the weight value of the connection route is; the host mobile terminal determines the weight value of the connection route according to the length of the distance of the connection route; wherein the longer the distance of the connection route is, the larger the weight value of the connection route is;
after receiving the broadcasted routing table information, the slave mobile terminal returns an acknowledgement message to the host mobile terminal.

Step 104: after receiving the acknowledgement message of all slave mobile terminals, the host mobile terminal sends all slave mobile terminals a command to report all sensor resource information.

Step 105: the slave mobile terminals report all sensor resource information of themselves to the host mobile terminal according to the received command.

Step 106: the host mobile terminal generates a sensor resource list according to the received sensor resource information reported by all slave mobile terminals and the sensor resource information of the host mobile terminal itself, and broadcasts the generated sensor resource list to all slave mobile terminals;
after receiving the broadcasted sensor resource list, the slave mobile terminal returns an acknowledgement message of having received the sensor resource list to the host mobile terminal; thus, the processes of building the network for sharing sensor data and broadcasting sensor resource list are finished.

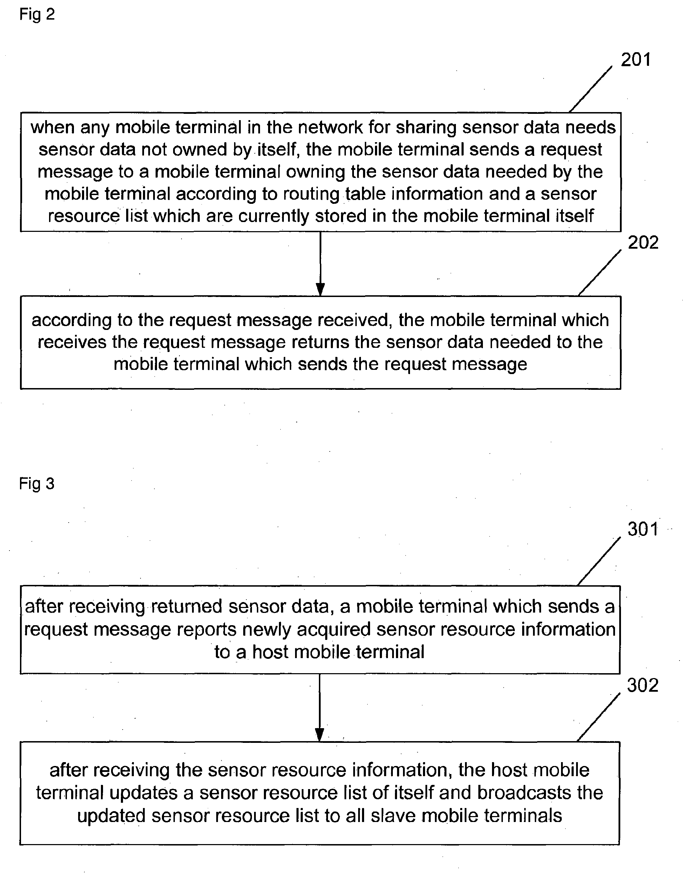

A method for sharing sensor data among mobile terminals realized by the disclosure is as shown in Fig. 2, the method includes the following steps.

Step 201: when any mobile terminal in the network for sharing sensor data needs sensor data not owned by itself, the mobile terminal sends a request message to a mobile terminal owning the sensor data needed by the mobile terminal according to routing table information and a sensor resource list which are currently stored in the mobile terminal itself;
here, the mobile terminal can be a smart mobile terminal; the sensor resource list includes: sensor resource information of all mobile terminals; the routing table information includes: connection information of the mobile terminal and a weight value of connection route, wherein the longer the distance of the connection route is, the larger the weight value of connection route is;
the request message includes: the sensor data needed by the mobile terminal, wherein there can be more than one needed sensor data;
generally, the mobile terminal first sends a request message including information of the needed sensor data to a nearest mobile terminal owning the sensor data needed by the mobile terminal, to obtain the requested sensor data quickly; wherein the nearest mobile terminal refers to the mobile terminal with the smallest weight value of connection route.

Step 202: according to the request message received, the mobile terminal which receives the request message returns the sensor data needed to the mobile terminal which sends the request message.

A method after a mobile terminal which sends a request message receives returned sensor data according to the disclosure is as shown in Fig. 3, the method further includes the following steps.

Step 301: after receiving returned sensor data, a mobile terminal which sends a request message reports newly acquired sensor resource information to a host mobile terminal; and

Step 302: after receiving the sensor resource information, the host mobile terminal updates a sensor resource list of itself and broadcasts the updated sensor resource list to all slave mobile terminals.

The mobile terminal which sends the request message can be a host mobile terminal or a slave mobile terminal; and the mobile terminal which receives the request message can be a host mobile terminal or a slave mobile terminal; in other words, the host mobile terminal and the slave mobile terminal is neither master nor slave in respect of information reception and transmission. Of course, if the mobile terminal which sends the request message is a host mobile terminal, only Step 302 needs to be executed but it is not necessary to report the newly acquired sensor resource information.

During a network operation, if there is a slave mobile terminal applying for network quit, then the slave mobile terminal sends a request message of network quit to the host mobile terminal; after the host mobile terminal receives the request message, Step 101 to Step 106 are executed again to complete building of a network and broadcasting of a sensor resource list; at the moment, the mobile terminal which applies for network quit does not participate in the whole process.

If the host mobile terminal applies for network quit, an authority of the host mobile terminal is transferred to one slave mobile terminal first, then the host mobile terminal quits from the network; the host mobile terminal and all slave mobile terminals can elect a slave mobile terminal as the mobile terminal to be transferred through information interaction; specifically, the host mobile terminal can find a nearest slave mobile terminal from routing table information as a new host mobile terminal and broadcasts it to all slave mobile terminals; after receiving the broadcast, the slave mobile terminals return acknowledgement messages to the host mobile terminal, so as to determine the slave mobile terminal to be transferred.

If the host mobile terminal initiates a request of network removal, the host mobile terminal broadcasts a message of network removal to all slave mobile terminals; after determining no service processing, the slave mobile terminals return removal confirmation messages to the host mobile terminal; the host mobile terminal removes the network after receiving the removal confirmation messages returned by all slave mobile terminals and determining the completion of service processing of the host mobile terminal itself; after the network is removed, each mobile terminal deletes routing table information and a sensor resource list stored in the each mobile terminal.

During a network operation, if a mobile terminal has a failure, there are mainly three conditions as follows:
(1) the failed mobile terminal is a host mobile terminal. When some slave mobile terminal finds that the host mobile terminal has a failure during information transmission, after a period of time, when determining that the host mobile terminal is still in a failure state, the slave mobile terminal selects a slave mobile terminal as a new host mobile terminal according to routing table information by using a shortest-route match algorithm; Step 101 to Step 106 are executed again to complete rebuilding of a network and broadcasting of a sensor resource list; at the moment, the previous host mobile terminal does not participate in the whole process;
   here, since there is regular information interaction between the host mobile terminal and the slave mobile terminal, the slave mobile terminal can learn whether the host mobile terminal is in a failure state; in addition, there is information interaction between slave mobile terminals; a slave mobile terminal, which first knows that the host mobile terminal is in a failure state, notifies other slave mobile terminals after learning that the host mobile terminal is in a failure state, and selects a slave mobile terminal as a new host mobile terminal, then other slave mobile terminals do not execute an operation of a new host mobile terminal selection after receiving the notification;
(2) when the failed mobile terminal is a slave mobile terminal, after the host mobile terminal determines that there is a slave mobile terminal having a failure through information interaction, the host mobile terminal modifies routing table information according to a shortest-route match algorithm and broadcasts the modified routing table information to all slave mobile terminals; at the moment, the slave mobile terminal having a failure does not participate in the whole process; and
(3) if there are more than two mobile terminals having a failure, then it is considered that network connection fails and network rebuilding is needed.

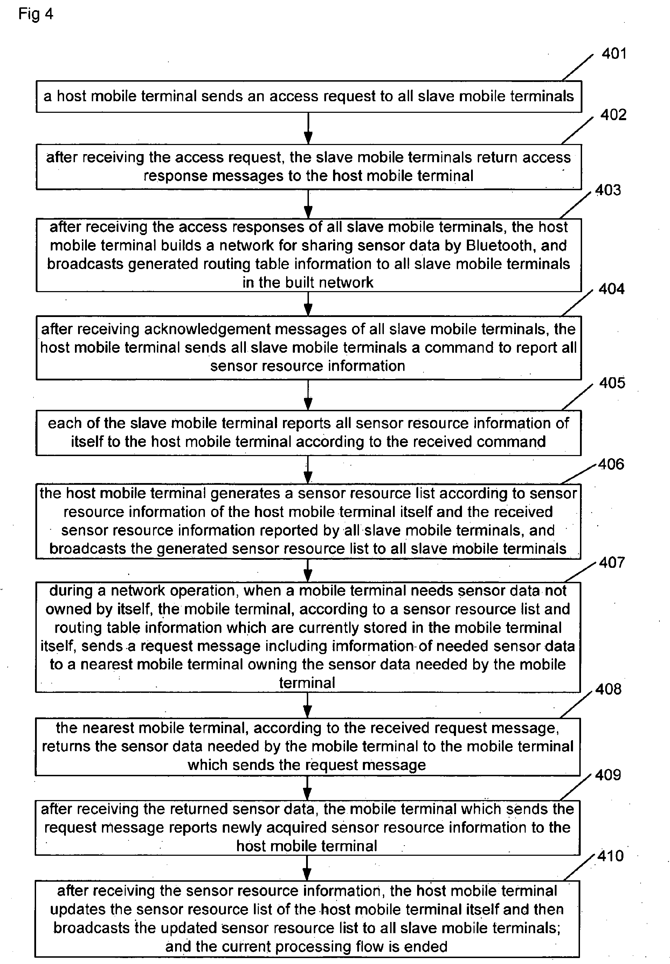

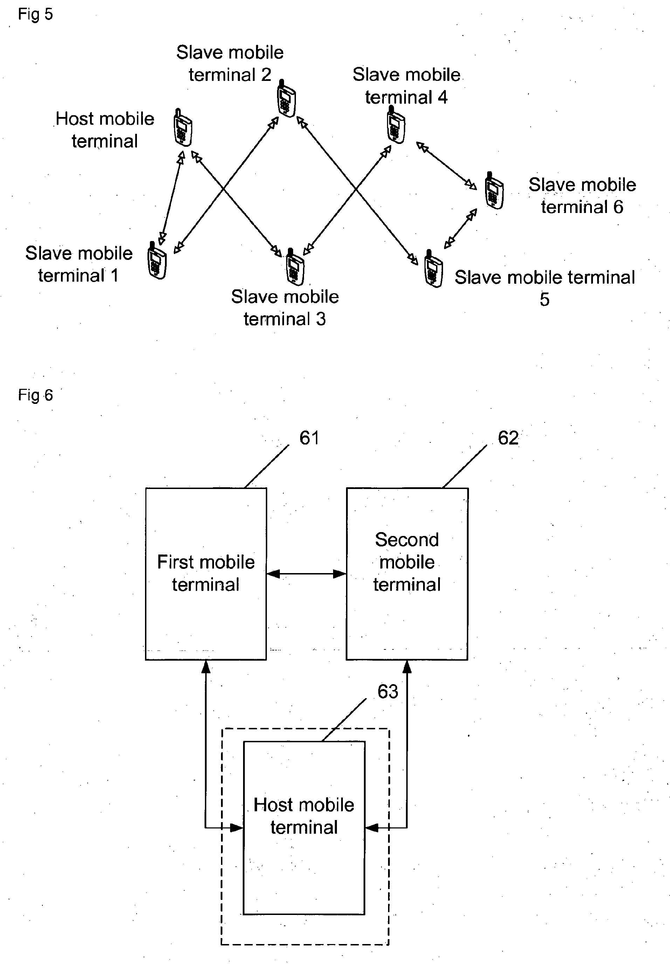

The present disclosure is further illustrated in detail by taking building of a network for sharing sensor data by Bluetooth for example hereinafter; as shown in Fig. 4, the method includes the following steps:
Step 401: a host mobile terminal sends an access request to all slave mobile terminals;
   here, since a network for sharing sensor data is built by Bluetooth, the total number of mobile terminals does not exceed 7 according to a standard of a Bluetooth network;
Step 402: after receiving the access request, the slave mobile terminals return access response messages to the host mobile terminal;
   here, before returning an access response message, each slave mobile terminal needs to acquire distances between the each slave mobile terminal itself and other respective slave mobile terminals respectively through a time interval of interaction; wherein the access response message includes the distances between each slave mobile terminal and other slave mobile terminals;
Step 403: after receiving the access responses of all slave mobile terminals, the host mobile terminal builds a network for sharing sensor data by Bluetooth, and broadcasts generated routing table information to all slave mobile terminals in the built network; then Step 404 is executed;
   here, after receiving the access responses of the slave mobile terminals, the host mobile terminal builds the network for sharing sensor data by Bluetooth according to distances between the host mobile terminal itself and the respective slave mobile terminals and distances between the respective slave mobile terminals in combination with a rule that one mobile terminal can only be connected with another two mobile terminals and a shortest-route match algorithm; a topology of the built network is as shown in Fig. 5, wherein the network topology includes seven mobile terminals, including one host mobile terminal and six slave mobile terminals;
Step 404: after receiving acknowledgement messages of all slave mobile terminals, the host mobile terminal sends all slave mobile terminals a command to report all sensor resource information;
   here, all slave mobile terminals refer to the six slave mobile terminals as shown in the Fig. 5;
Step 405: each of the slave mobile terminal reports all sensor resource information of itself to the host mobile terminal according to the received command;
Step 406: the host mobile terminal generates a sensor resource list according to sensor resource information of the host mobile terminal itself and the received sensor resource information reported by all slave mobile terminals, and broadcasts the generated sensor resource list to all slave mobile terminals; then Step 407 is executed;
Step 407: during a network operation, when a mobile terminal needs sensor data not owned by itself, the mobile terminal, according to a sensor resource list and routing table information which are currently stored in the mobile terminal itself, sends a request message including information of needed sensor data to a nearest mobile terminal owning the sensor data needed by the mobile terminal;
Step 408: the nearest mobile terminal, according to the received request message, returns the sensor data needed by the mobile terminal to the mobile terminal which sends the request message;
   here, when the sensor data of the nearest mobile terminal is unusable, the mobile terminal which sends the request message finds a second nearest mobile terminal according to the routing table information and sends a request message including information of needed sensor data to the found second nearest mobile terminal, by such analogy, until available sensor data is obtained; wherein, if the mobile terminal which sends the request message does not obtain sensor data returned by the mobile terminal which receives the request message during a period of time, it is considered that the sensor data of the mobile terminal which sends the request message is unusable, wherein a length of the time can be pre-determined in the entire network;
Step 409: after receiving the returned sensor data, the mobile terminal which sends the request message reports newly acquired sensor resource information to the host mobile terminal;
Step 410: after receiving the sensor resource information, the host mobile terminal updates the sensor resource list of the host mobile terminal itself and then broadcasts the updated sensor resource list to all slave mobile terminals; and the current processing flow is ended;
   here, when the slave mobile terminal or the host mobile terminal needs sensor data not owned by the slave mobile terminal itself or the host mobile terminal itself, the slave mobile terminal or the host mobile terminal can send a request message to a nearest mobile terminal owning the sensor data needed by the slave mobile terminal or the host mobile terminal, according to the updated sensor resource list and the routing table information.

For example, in the Fig. 5, a slave mobile terminal 4 acquires temperature sensor data from a slave mobile terminal 3 and then reports newly added temperature sensor resource information to a host mobile terminal; accordingly, the host mobile terminal updates the sensor resource list of itself and broadcasts the updated sensor resource list to all slave mobile terminals; a slave mobile terminal 5, according to the updated sensor resource list and routing table information, acquires the temperature sensor data from the slave mobile terminal 4 and then broadcasts the newly added temperature sensor resource information to the host mobile terminal; accordingly, the host mobile terminal updates the sensor resource list of itself again and broadcasts the updated sensor resource list to all slave mobile terminals; at the moment, if a slave mobile terminal 2 further needs the temperature sensor data, the slave mobile terminal 2 can send a request message to the nearest slave mobile terminal 5 preferentially according to the sensor resource list updated again and the routing table information.

When a mobile terminal which sends a request message does not need some sensor data acquired from a mobile terminal which receives the request message, and other mobile terminals do not share the sensor data acquired by the mobile terminal which sends the request message from the mobile terminal which receives the request message, the mobile terminal which sends the request message deletes the sensor data and reports deleted sensor resource information to the host mobile terminal; and the host mobile terminal updates the sensor resource list of itself after receiving the deleted sensor resource information and broadcasts the updated sensor resource list to all slave mobile terminals. For the example above, if the slave mobile terminal 4 does not need the temperature sensor data, the slave mobile terminal 4 examines whether the slave mobile terminal 5 needs the temperature sensor data, if yes, the slave mobile terminal 4 continues to transmit the temperature sensor data to the slave mobile terminal 5; otherwise, the slave mobile terminal 4 deletes the temperature sensor data and reports deleted sensor resource information to the host mobile terminal.

It can be determined , according to an application condition of a sensor of a mobile terminal which sends a request message, whether the mobile terminal which sends the request message needs the sensor data; after determining that the mobile terminal which sends the request message does not need some sensor data acquired from a mobile terminal which receives the request message, the mobile terminal which sends the request message sends a message whether the corresponding sensor data is needed to other mobile terminals which share the sensor data acquired by the mobile terminal which sends the request message from the mobile terminal which receives the request message; after receiving the message whether the corresponding sensor data is needed, the other mobile terminals return messages of needing or not needing to the mobile terminal which sends the request message, and the mobile terminal which sends the request message determines whether to delete the sensor data according to content of the messages.

Based on the method above, the present disclosure further provides a network for sharing sensor data among mobile terminals, wherein the network includes: more than one first mobile terminal 61 and more than one second mobile terminal 62, in which,
the first mobile terminal 61 is configured, according to routing table information and a sensor resource list which are currently stored in the first mobile terminal itself, to send a request message to the second mobile terminal 62; and
the second mobile terminal 62 is configured, after receiving the request message sent by the first mobile terminal 61, to return needed sensor data to the first mobile terminal 61 according to the received request message.

Here, it should be noted that, the second mobile terminal 62 can be a nearest mobile terminal owning the sensor data needed by the first mobile terminal 61.

Wherein, all the first mobile terminals 61 and all the second mobile terminals 62 are called slave mobile terminals, wherein there can be more than one slave mobile terminal; the network further includes:
a host mobile terminal 63 configured to receive newly acquired, and/or deleted sensor resource information reported by the first mobile terminal 61; after receiving the sensor resource information, to update the sensor resource list of itself and then broadcasting the updated sensor resource list to all slave mobile terminals;
the first mobile terminal 61 is further configured to report newly acquired, and/or deleted sensor resource information to the host mobile terminal 63 and receive the updated sensor resource list broadcasted by the host mobile terminal 63; and
the second mobile terminal 62 is further configured to receive the updated sensor resource list broadcasted by the host mobile terminal 63.

The host mobile terminal 63 is further configured to send an access request to the slave mobile terminal; after receiving an access response from the slave mobile terminals, to build a network for sharing sensor data and broadcast generated routing table information to the slave mobile terminals;
the first mobile terminal 61 is further configured, after receiving the access request, to return an access response message to the host mobile terminal 63 and receive the routing table information broadcasted by the host mobile terminal 63; after receiving the routing table information, to return an acknowledgement message to the host mobile terminal 63; and
the second mobile terminal 62 is further configured, after receiving the access request, to return an access response message to the host mobile terminal 63 and receive the routing table information broadcasted by the host mobile terminal 63; after receiving the routing table information, to return an acknowledgement message to the host mobile terminal 63.

The host mobile terminal 63 is further configured, after receiving the acknowledgement message from the slave mobile terminals, to send the slave mobile terminals a command to report all sensor resource information, and receive all sensor resource information reported by the slave mobile terminals; after receiving all sensor resource information reported by the slave mobile terminals, to generate a sensor resource list and broadcast the sensor resource list to the slave mobile terminals;
the first mobile terminal 61 is further configured to receive the command to report all sensor resource information from the host mobile terminal 63; after receiving the command, to report all sensor resource information of itself to the host mobile terminal 63; and further to receive the sensor resource list broadcasted by the host mobile terminal 63; and
the second mobile terminal 62 is further configured to receive the command to report all sensor resource information from the host mobile terminal 63; after receiving the command, to report all sensor resource information of itself to the host mobile terminal 63; and further to receive the sensor resource list broadcasted by the host mobile terminal 63.

The host mobile terminal 63 is further configured to broadcast a network removal message to the slave mobile terminals and delete the routing table information of the host mobile terminal 63 and the sensor resource list after determining the network removal;
the first mobile terminal 61 is further configured to receive the network removal message broadcasted by the host mobile terminal 63 and delete the routing table information and the sensor resource list of itself after determining the network removal; and
the second mobile terminal 62 is further configured to receive the network removal message broadcasted by the host mobile terminal 63 and delete the routing table information and the sensor resource list of itself after determining the network removal.

The host mobile terminal 63 sends an access request, broadcasts a message of network removal, broadcasts routing table information and broadcasts a sensor resource list to all slave mobile terminals.

The above are only the preferred embodiments of the disclosure and are not intended to limit the scope of protection of the present disclosure.

## Claims

1. A method for sharing sensor data among mobile terminals, comprising: building by a mobile terminal a network for sharing sensor data in advance; and
when any mobile terminal in the network for sharing sensor data needs sensor data not owned by itself, sending (Step 201) a request message by the mobile terminal to another mobile terminal owning the sensor data needed by the mobile terminal to access said sensor data, according to routing table information and a sensor resource list which are currently stored in the mobile terminal itself;
according to the request message received, returning (Step 202), by the other mobile terminal which receives the request message, the sensor data needed to the mobile terminal which sends the request message,
**characterized in that** the mobile terminal initiating an access request is taken as a host mobile terminal while the mobile terminal receiving the access request is taken as a slave mobile terminal; and wherein
the building by a mobile terminal of a network for sharing sensor further comprises the steps of:
sending (Step 101) an access request by the host mobile terminal to all slave mobile terminals, and returning (Step 102) access response messages by the slave mobile terminals to the host mobile terminal after receiving the access request;
building (Step 103) a network for sharing sensor data by the host mobile terminal according to the access response messages returned by the slave mobile terminals and generating routing table information, and meanwhile broadcasting the information to all slave mobile terminals in the network built;
sending (Step 104), by the host mobile terminal, to all slave mobile terminals a command to report all sensor resource information; after receiving the command, reporting (Step 105) all sensor resource information of themselves by the slave mobile terminals to the host mobile terminal;
according to sensor resource information of the host mobile terminal itself and received sensor resource information reported by all slave mobile terminals, generating (Step 106) a sensor resource list and broadcasting the sensor resource list to all slave mobile terminals by the host mobile terminal.

2. The method according to claim 1, wherein the sending a request message by any mobile terminal which needs sensor data not owned by itself to a mobile terminal owning the sensor data needed by the mobile terminal comprises:
sending the request message by the mobile terminal which sends the request message to a nearest mobile terminal which receives the request message to request the nearest mobile terminal to return requested sensor data;
when sensor data of the nearest mobile terminal which receives the request message is unusable, finding a second nearest mobile terminal by the mobile terminal which sends the request message according to the routing table information and sending a request message to the second nearest mobile terminal found out, by such analogy, until finding out a mobile terminal which can respond to a request message from the mobile terminal which sends the request message.

3. The method according to claim 2, wherein a distance between the mobile terminal which sends the request message and the mobile terminal which receives the request message is determined by time needed by an information interaction between the mobile terminals.

4. The method according to claim 1, further comprising:
when the mobile terminal which sends the request message does not need sensor data acquired from the mobile terminal which receives the request message, and other mobile terminals do not share the sensor data acquired by the mobile terminal which sends the request message from the mobile terminal which receives the request message, deleting the sensor data acquired by the mobile terminal which sends the request message from the mobile terminal which receives the request message and reporting deleted sensor resource information to the host mobile terminal;
updating, by the host mobile terminal, the sensor resource list of itself and broadcasting an updated sensor resource list to all slave mobile terminals.

5. The method according to claim 1, further comprising: when the mobile terminal which sends the request message is taken as a slave mobile terminal, reporting(Step 301) newly acquired sensor resource information to the host mobile terminal by the mobile terminal which sends the request message after receiving the sensor data returned;
updating(Step 302), by the host mobile terminal, the sensor resource list of itself and broadcasting the updated sensor resource list to all slave mobile terminals.

6. The method according to claim 1, further comprising: when the mobile terminal which sends the request message is taken as a host mobile terminal, updating, by the host mobile terminal, the sensor resource list of itself according to newly acquired sensor resource information, and broadcasting the updated sensor resource list to all slave mobile terminals by the host mobile terminal.

7. The method according to claim 1, further comprising:
broadcasting a network removal message by a host mobile terminal to all slave mobile terminals;
returning removal confirmation messages to the host mobile terminal by slave mobile terminals which receive the network removal message after determining there is no service to be processed;
removing the network by the host mobile terminal after receiving removal confirmation messages returned by all slave mobile terminals and determining completion of service processing of the host mobile terminal itself; and
deleting, by each mobile terminal, routing table information and a sensor resource list stored in the each mobile terminal.

8. A network for sharing sensor data among mobile terminals, comprising more than one first mobile terminal (61) and more than one second mobile terminal (62), wherein
the first mobile terminal (61) is configured, according to routing table information and a sensor resource list which are currently stored in the first mobile terminal (61) itself, to send a request message to the second mobile terminal (62) to access sensor data; and
the second mobile terminal (62) is configured, after receiving the request message sent by the first mobile terminal (61), to return needed sensor data to the first mobile terminal (61) according to the request message received,
**characterized in that** all the first mobile terminals (61) which initiate the access requests are taken as host mobile terminals and all the second mobile terminals (62) which receive the access requests are taken as slave mobile terminals, the network further comprising:
a host mobile terminal (63) is configured to send an access request to all the slave mobile terminals (61, 62) and after receiving an access response from the slave mobile terminals (61, 62), to build a network for sharing sensor data and to broadcast a generated routing table information to the slave mobile terminals (61, 62);
a slave mobile terminal (61) is configured, after receiving the access request, to return an access response message to the host mobile terminal (63) and receive the routing table information broadcasted by the host mobile terminal (63); after receiving the routing table information, to return an acknowledgement message to the host mobile terminal (63); and wherein
the host mobile terminal (63) is further configured, after receiving the acknowledgement message from the slave mobile terminals (61, 62), to send the slave mobile terminals (61, 62) a command to report all sensor resource information, and to receive all sensor resource information reported by the slave mobile terminals (61, 62) and after receiving all sensor resource information reported by the slave mobile terminals (61, 62), to generate a sensor resource list and broadcast the sensor resource list to the slave mobile terminals (61, 62);
the slave mobile terminal (61) is further configured to receive the command to report all sensor resource information from the host mobile terminal (63); after receiving the command, to report all its sensor resource information to the host mobile terminal (63); and further to receive the sensor resource list broadcasted by the host mobile terminal (63).

9. The network according to claim 8 or 9, wherein
the host mobile terminal (63) is configured to receive newly acquired, and/or deleted sensor resource information reported by the first mobile terminal (61); after receiving the sensor resource information, to update the sensor resource list of itself and then broadcast the updated sensor resource list to all slave mobile terminals (61, 62);
the first mobile terminal (61) is further configured to report newly acquired, and/or deleted sensor resource information to the host mobile terminal (63) and receive the updated sensor resource list broadcasted by the host mobile terminal (63); and
the second mobile terminal (62) is further configured to receive the updated sensor resource list broadcasted by the host mobile terminal (63).

## Patentansprüche

1. Verfahren zur gemeinsamen Nutzung von Sensordaten zwischen mobilen Endgeräten, umfassend Aufbauen eines Netzwerks zur gemeinsamen Nutzung von Sensordaten im Voraus durch ein mobiles Endgerät; und
wenn ein mobiles Endgerät im Netzwerks zur gemeinsamen Nutzung von Sensordaten Sensordaten benötigt, über die es nicht selbst verfügt, Senden (Schritt 201) einer Anfragemeldung durch das mobile Endgerät an ein anderes mobiles Endgerät, das über die Sensordaten verfügt, die das mobile Endgerät benötigt, um auf die Sensordaten zuzugreifen, gemäß einer Routingtabelleninformation und einer Sensorressourcenliste, die gegenwärtig im mobilen Endgerät selbst gespeichert sind;
gemäß der erhaltenen Anfragemeldung Rücksenden (Schritt 202) durch das andere mobile Endgerät, das die Anfragemeldung erhält, der benötigten Sensordaten an das mobile Endgerät, das die Anfragemeldung sendet,
**dadurch gekennzeichnet, dass** das mobile Endgerät, das eine Zugriffsanfrage initiiert, als ein mobiles Host-Endgerät verwendet wird, während das mobile Endgerät, das die Zugriffsanfrage erhält, als ein mobiles Slave-Endgerät verwendet wird; und wobei
das Aufbauen eines Netzwerks zur gemeinsamen Nutzung eines Sensors durch ein mobiles Endgerät weiter die folgenden Schritte umfasst:
Senden (Schritt 101) einer Zugriffsanfrage durch das mobile Host-Endgerät an alle mobilen Slave-Endgeräte und Rücksenden (Schritt 102) der Zugriffsantwortmeldungen durch die mobilen Slave-Endgeräte an das mobile Host-Endgerät nach dem Erhalten der Zugriffsanfrage;
Aufbauen (Schritt 103) eines Netzwerkes zur gemeinsamen Nutzung von Sensordaten durch das mobile Host-Endgerät gemäß den Zugriffsantwortmeldungen, die von den mobilen Slave-Endgeräten zurückgesendet werden, und Erzeugen von Routingtabelleninformation, und währenddessen Übertragen der Information an alle mobilen Slave-Endgeräte im aufgebauten Netzwerk;
Senden (Schritt 104) durch das mobile Host-Endgerät eines Befehls an alle mobilen Slave-Endgeräte, um die gesamte Sensorressourceninformation zu berichten; nach dem Erhalten des Befehls Berichten (Schritt 105) der gesamten Sensorressourceninformation von sich selbst durch die mobilen Slave-Endgeräte an das mobile Host-Endgerät;
gemäß der Sensorressourceninformation des mobilen Host-Endgeräts selbst und der erhaltenen Sensorressourceninformation, die von allen mobilen Slave-Endgeräten berichtet wird, Erzeugen (Schritt 106) einer Sensorressourcenliste und Übertragen der Sensorressourcenliste an alle mobilen Slave-Endgeräte durch das mobile Host-Endgerät.

2. Verfahren nach Anspruch 1, wobei das Senden einer Anfragemeldung durch ein mobiles Endgerät, das Sensordaten benötigt, über die es nicht selbst verfügt, an ein mobiles Endgerät, das über die Sensordaten verfügt, die vom mobilen Endgerät benötigt werden, Folgendes umfasst:
Senden der Anfragemeldung durch das mobile Endgerät das die Anfragemeldung an ein nächstgelegenes mobiles Endgerät sendet, das die Anfragemeldung erhält, um beim nächstgelegenen mobilen Endgerät anzufragen, die angefragten Sensordaten zurückzusenden,
wenn die Sensordaten des nächstgelegenen mobilen Endgeräts, das die Anfragemeldung erhält, nicht verwendbar sind, Finden eines zweiten nächstgelegenen mobilen Endgeräts durch das mobile Endgerät, das die Anfragemeldung gemäß der Routingtabelleninformation sendet und Senden der Anfragemeldung an das gefundene zweite nächstgelegene mobile Endgerät durch eine derartige Analogie, bis ein mobiles Endgerät gefunden wird, das auf eine Anfragemeldung vom mobilen Endgerät antworten kann, das die Anfragemeldung sendet.

3. Verfahren nach Anspruch 2, wobei ein Abstand zwischen dem mobilen Endgerät, das die Anfragemeldung sendet, und dem mobilen Endgerät, das die Anfragemeldung erhält, durch die Zeit bestimmt wird, die für einen Informationsaustausch zwischen den mobilen Endgeräten erforderlich ist.

4. Verfahren nach Anspruch 1, weiter umfassend:
wenn das mobile Endgerät, das die Anfragemeldung sendet, keine Sensordaten benötigt, die vom mobilen Endgerät erworben werden, das die Anfragemeldung erhält, und andere mobile Endgeräte die Sensordaten nicht gemeinsam nutzen, die vom mobilen Endgerät erworben werden, das die Anfragemeldung vom mobilen Endgerät sendet, das die Anfragemeldung erhält, Löschen der Sensordaten, die vom mobilen Endgerät erworben werden, das die Anfragemeldung vom mobilen Endgerät sendet, das die Anfragemeldung erhält, und Berichten der gelöschten Sensorressourceninformation an das mobile Host-Endgerät;
Aktualisieren der Sensorressourcenliste von sich selbst durch das mobile Host-Endgerät und Übertragen einer aktualisierten Sensorressourcenliste an alle mobilen Slave-Endgeräte.

5. Verfahren nach Anspruch 1, weiter umfassend: wenn das mobile Endgerät, das die Anfragemeldung sendet, als ein mobiles Slave-Endgerät verwendet wird, Berichten (Schritt 301) der neu erworbenen Sensorressourceninformation an das mobile Host-Endgerät durch das mobile Endgerät, das die Anfragemeldung sendet, nachdem die zurückgesendeten Sensordaten erhalten wurden.
Aktualisieren (Schritt 302) durch das mobile Host-Endgerät, der Sensorressourcenliste von sich selbst und Übertragen einer aktualisierten Sensorressourcenliste an alle mobilen Slave-Endgeräte.

6. Verfahren nach Anspruch 1, weiter umfassend: wenn das mobile Endgerät, das die Anfragemeldung sendet, als ein mobiles Host-Endgerät verwendet wird, Aktualisieren, durch das mobile Host-Endgerät, der Sensorressourcenliste von sich selbst gemäß der neu erworbenen Sensorressourceninformation und Übertragen einer aktualisierten Sensorressourcenliste an alle mobilen Slave-Endgeräte durch das mobile Host-Endgerät.

7. Verfahren nach Anspruch 1, weiter umfassend:
Übertragen einer Netzwerkentfernungsmeldung durch ein mobiles Host-Endgerät an alle mobilen Slave-Endgeräte;
Rücksenden der Entfernungsbestätigungsmeldungen an das mobile Host-Endgerät durch mobile Slave-Endgeräte, die die Netzwerkentfernungsmeldung nach dem Bestimmen erhalten, dass kein Dienst verarbeitet werden muss;
Entfernen des Netzwerks durch das mobile Endgerät nach dem Erhalten der Entfernungsbestätigungsmeldungen, die von allen mobilen Slave-Endgeräten zurückgesendet werden, und Bestimmen der Beendigung der Dienstverarbeitung des mobilen Endgeräts selbst; und
Löschen durch jedes mobile Endgerät der Routingtabelleninformation und einer Sensorressourcenliste, die in jedem mobilen Endgerät gespeichert ist.

8. Netzwerk zur gemeinsamen Nutzung von Sensordaten zwischen mobilen Endgeräten die mehr als ein erstes mobiles Endgerät (61) und mehr als ein zweites mobiles Endgerät (62) umfassen,
wobei das erste mobile Endgerät (61) gemäß der Routingtabelleninformation und einer Sensorressourcenliste konfiguriert ist, die gegenwärtig im ersten mobilen Endgerät (81) selbst gespeichert sind, um eine Anfragemeldung an das zweite mobile Endgerät (62) zu senden, um auf Sensordaten zuzugreifen; und
das zweite mobile Endgerät (62) konfiguriert ist, um nach dem Erhalten der Anfragemeldung, die vom ersten mobilen Endgerät (61) gesendet wurde, die erforderlichen Sensordaten an das erste mobile Endgerät (61) gemäß der erhaltenen Anfragemeldung zurückzusenden.
**dadurch gekennzeichnet, dass** alle ersten mobilen Endgeräte (61), die die Zugriffsanfragen initiieren, als mobile Host-Endgeräte verwendet werden, und alle zweiten mobilen Endgeräte (62), die die Zugriffsanfragen erhalten, als mobile Slave-Endgeräte verwendet werden, wobei das Verfahren weiter Folgendes umfasst:
ein mobiles Host-Endgerät (63), das konfiguriert ist, um eine Zugriffsanfrage an die mobilen Slave-Endgeräte (61, 62) zu senden, nach dem Erhalten einer Zugriffsantwort von den mobilen Slave-Endgeräten (61, 62), ein Netzwerk zur gemeinsamen Nutzung von Sensordaten aufzubauen und eine erzeugte Routingtabelleninformation an die mobilen Slave-Endgeräte (61, 62) zu übertragen;
ein mobiles Slave-Endgerät (61), das konfiguriert ist, um nach dem Erhalten der Zugriffsanfrage eine Zugriffsantwortmeldung an das mobile Host-Endgerät (63) zurückzusenden und die Routingtabelleninformation zu erhalten, die vom mobilen Host-Endgerät (63) übertragen wurde; um nach dem Erhalten der Routingtabelleninformation eine Bestätigungsmeldung an das mobile Host-Endgerät (63) zurückzusenden; und wobei
das mobile Host-Endgerät (63) weiter konfiguriert ist, um nach dem Erhalten der Bestätigungsmeldung von den mobilen Slave-Endgeräten (61, 62) den mobilen Slave-Endgeräten (61, 62) einen Befehl zu senden, um die gesamte Sensorressourceninformation zu berichten um die gesamte Sensorressourceninformation zu erhalten, die von den mobilen Slave-Endgeräten (61, 62) berichtet wurde, und nach dem Erhalten der gesamten Sensorressourceninformation, die von den mobilen Slave-Endgeräten (61, 62) berichtet wurde, eine Sensorressourcenliste zu erzeugen, und die Sensorressourcenliste an die mobilen Slave-Endgeräte (61, 62) zu übertragen;
das mobile Slave-Endgerät (61) weiter konfiguriert ist, um den Befehl zu erhalten, um die gesamte Sensorressourceninformation vom mobilen Host-Endgerät (63) zu berichten; nach dem Erhalten des Befehls die gesamte Sensorressourceninformation an das mobile Host-Endgerät (63) zu berichten; und weiter die Sensorressourcenliste zu erhalten, die vom mobilen Host-Endgerät (63) übertragen wurde.

9. Netzwerk nach Anspruch 8 oder 9, wobei
das mobile Host-Endgerät (63) konfiguriert ist, um neu erworbene und/oder gelöschte Sensorressourceninformation zu erhalten, die vom ersten mobilen Slave-Endgerät (61) berichtet wurde; nach dem Erhalten der gesamten Sensorressourceninformation die Sensorressourcenliste selbst zu aktualisieren und dann eine aktualisierte Sensorressourcenliste an alle mobilen Slave-Endgeräte (61, 62) zu übertragen;
das erste mobile Endgerät (61) weiter konfiguriert ist, um neu erworbene und/oder gelöschte Sensorressourceninformation an das mobile Host-Endgerät (63) zu berichten und die aktualisierte Sensorressourcenliste zu erhalten, die vom mobilen Host-Endgerät (63) übertragen wurde; und
das zweite mobile Endgerät (62) weiter konfiguriert ist, um die aktualisierte Sensorressourcenliste zu erhalten, die vom mobilen Host-Endgerät (63) übertragen wurde.

## Revendications

1. Procédé de partage de données de capteur entre des terminaux mobiles, comprenant les étapes ci-dessous consistant à :
construire, par le biais d'un terminal mobile, un réseau destiné à partager des données de capteur à l'avance ; et
lorsqu'un terminal mobile quelconque dans le réseau destiné à partager des données de capteur nécessite des données de capteur qui ne lui appartiennent pas, envoyer (étape 201) un message de demande, par le biais du terminal mobile, à un autre terminal mobile possédant les données de capteur requises par le terminal mobile dans le cadre de l'accès auxdites données de capteur, selon des informations de table de routage et une liste de ressources de capteur qui sont actuellement stockées dans le terminal mobile lui-même ;
selon le message de demande reçu, renvoyer (étape 202), par le biais de l'autre terminal mobile qui reçoit le message de demande, les données de capteur requises, au terminal mobile qui envoie le message de demande ;
**caractérisé en ce que** le terminal mobile initiant une demande d'accès est choisi en tant que terminal mobile hôte, tandis que le terminal mobile recevant la demande d'accès est choisi en tant que terminal mobile esclave ; et dans lequel
la construction, par le biais d'un terminal mobile, d'un réseau destiné à partager des données de capteur comprend en outre les étapes ci-dessous consistant à :
envoyer (étape 101) une demande d'accès, par le biais du terminal mobile hôte, à la totalité des terminaux mobiles esclaves, et renvoyer (étape 102) des messages de réponse d'accès, par le biais des terminaux mobiles esclaves, au terminal mobile hôte suite à la réception de la demande d'accès ;
construire (étape 103) un réseau destiné à partager des données de capteur, par le biais du terminal mobile hôte, selon les messages de réponse d'accès renvoyés par les terminaux mobiles esclaves, générer des informations de table de routage, et diffuser, entre-temps, les informations à la totalité des terminaux mobiles esclaves dans le réseau construit ;
envoyer (étape 104), par le biais du terminal mobile hôte, à la totalité des terminaux mobiles esclaves, une commande de signalement de la totalité des informations de ressources de capteur ; suite à la réception de la commande, signaler (étape 105) la totalité des informations de ressources de capteur de ces terminaux, par le biais des terminaux mobiles esclaves, au terminal mobile hôte ;
selon des informations de ressources de capteur du terminal mobile hôte lui-même et des informations de ressources de capteur reçues signalées par la totalité des terminaux mobiles esclaves, générer (étape 106) une liste de ressources de capteur et diffuser la liste de ressources de capteur à la totalité des terminaux mobiles esclaves par le biais du terminal mobile hôte.

2. Procédé selon la revendication 1, dans lequel l'envoi d'un message de demande par un terminal mobile quelconque nécessitant des données de capteur qui ne lui appartiennent pas, à un terminal mobile possédant les données de capteur requises par le terminal mobile, comprend les étapes ci-dessous consistant à :
envoyer le message de demande, par le biais du terminal mobile qui envoie le message de demande, à un terminal mobile le plus proche qui reçoit le message de demande, en vue de demander au terminal mobile le plus proche de renvoyer les données de capteur demandées ;
lorsque les données de capteur du terminal mobile le plus proche qui reçoit le message de demande sont inutilisables, rechercher un second terminal mobile le plus proche, par le biais du terminal mobile qui envoie le message de demande, selon les informations de table de routage, et envoyer un message de demande au second terminal mobile le plus proche découvert, selon un tel principe d'analogie, jusqu'à trouver un terminal mobile en mesure de répondre à un message de demande en provenance du terminal mobile qui envoie le message de demande.

3. Procédé selon la revendication 2, dans lequel une distance entre le terminal mobile qui envoie le message de demande et le terminal mobile qui reçoit le message de demande est déterminée par le temps requis par une interaction d'informations entre les terminaux mobiles.

4. Procédé selon la revendication 1, comprenant en outre les étapes ci-dessous consistant à :
lorsque le terminal mobile qui envoie le message de demande ne nécessite pas de données de capteur acquises à partir du terminal mobile qui reçoit le message de demande, et lorsque d'autres terminaux mobiles ne partagent pas les données de capteur acquises par le terminal mobile qui envoie le message de demande à partir du terminal mobile qui reçoit le message de demande, supprimer les données de capteur acquises par le terminal mobile qui envoie le message de demande à partir du terminal mobile qui reçoit le message de demande, et signaler des informations de ressources de capteur supprimées au terminal mobile hôte ;
mettre à jour, par le biais du terminal mobile hôte, la liste de ressources de capteur propre à ce dernier et diffuser une liste de ressources de capteur mise à jour à la totalité des terminaux mobiles esclaves.

5. Procédé selon la revendication 1, comprenant en outre les étapes ci-dessous consistant à : lorsque le terminal mobile qui envoie le message de demande est choisi en tant que terminal mobile esclave, signaler (étape 301) des informations de ressources de capteur nouvellement acquises au terminal mobile hôte, par le biais du terminal mobile qui envoie le message de demande, suite à la réception des données de capteur renvoyées ;
mettre à jour (étape 302), par le biais du terminal mobile hôte, la liste de ressources de capteur propre à ce dernier, et diffuser la liste de ressources de capteur mise à jour à la totalité des terminaux mobiles esclaves.

6. Procédé selon la revendication 1, comprenant en outre les étapes ci-dessous consistant à : lorsque le terminal mobile qui envoie le message de demande est choisi en tant que terminal mobile hôte, mettre à jour, par le biais du terminal mobile hôte, la liste de ressources de capteur propre à ce dernier, selon des informations de ressources de capteur nouvellement acquises, et diffuser la liste de ressources de capteur mise à jour à la totalité des terminaux mobiles esclaves, par le biais du terminal mobile hôte.

7. Procédé selon la revendication 1, comprenant en outre les étapes ci-dessous consistant à :
diffuser un message de suppression de réseau, par le biais d'un terminal mobile hôte, à la totalité des terminaux mobiles esclaves ;
renvoyer des messages de confirmation de suppression au terminal mobile hôte, par le biais de terminaux mobiles esclaves qui reçoivent le message de suppression de réseau, après avoir déterminé qu'il n'existe pas de service à traiter ;
supprimer le réseau, par le biais du terminal mobile hôte, suite à la réception de messages de confirmation de suppression renvoyés par la totalité des terminaux mobiles esclaves, et déterminer un achèvement de traitement de service du terminal mobile hôte lui-même ; et
supprimer, par le biais de chaque terminal mobile, des informations de table de routage et une liste de ressources de capteur stockées dans chaque terminal mobile.

8. Réseau destiné à partager des données de capteur entre des terminaux mobiles, comprenant plus d'un premier terminal mobile (61) et plus d'un second terminal mobile (62), dans lequel
le premier terminal mobile (61) est configuré, selon des informations de table de routage et une liste de ressources de capteur qui sont actuellement stockées dans le premier terminal mobile (61) lui-même, de manière à envoyer un message de demande au second terminal mobile (62) dans le cadre d'un accès à des données de capteur ; et
le second terminal mobile (62) est configuré, suite à la réception du message de demande envoyé par le premier terminal mobile (61), de manière à renvoyer des données de capteur requises, au premier terminal mobile (61), selon le message de demande reçu ;
**caractérisé en ce que** tous les premiers terminaux mobiles (61) qui initient les demandes d'accès sont choisis en tant que terminaux mobiles hôtes et tous les seconds terminaux mobiles (62) qui reçoivent les demandes d'accès sont choisis en tant que terminaux mobiles esclaves, le réseau comprenant en outre :
un terminal mobile hôte (63) qui est configuré de manière à envoyer une demande d'accès à la totalité des terminaux mobiles esclaves (61, 62) et, suite à la réception d'une réponse d'accès en provenance des terminaux mobiles esclaves (61, 62), à construire un réseau destiné à partager des données de capteur et à diffuser des informations de table de routage générées aux terminaux mobiles esclaves (61, 62) ;
un terminal mobile esclave (61) qui est configuré, suite à la réception de la demande d'accès, de manière à renvoyer un message de réponse d'accès au terminal mobile hôte (63) et à recevoir les informations de table de routage diffusées par le terminal mobile hôte (63) ; suite à la réception des informations de table de routage, à renvoyer un message d'accusé de réception au terminal mobile hôte (63) ; et dans lequel
le terminal mobile hôte (63) est en outre configuré, suite à la réception du message d'accusé de réception en provenance des terminaux mobiles esclaves (61, 62), de manière à envoyer, aux terminaux mobiles esclaves (61, 62), une commande de signalement de toutes les informations de ressources de capteur, et à recevoir la totalité des informations de ressources de capteur signalées par les terminaux mobiles esclaves (61, 62), et suite à la réception de la totalité des informations de ressources de capteur signalées par les terminaux mobiles esclaves (61, 62), à générer une liste de ressources de capteur et à diffuser la liste de ressources de capteur aux terminaux mobiles esclaves (61, 62) ;
le terminal mobile esclave (61) est en outre configuré de manière à recevoir la commande de signalement de toutes les informations de ressources de capteur en provenance du terminal mobile hôte (63) ; suite à la réception de la commande, à signaler toutes ses informations de ressources de capteur au terminal mobile hôte (63) ; et en outre à recevoir la liste de ressources de capteur diffusée par le terminal mobile hôte (63).

9. Réseau selon la revendication 8 ou 9, dans lequel
le terminal mobile hôte (63) est configuré de manière à recevoir des informations de ressources de capteur nouvellement acquises et/ou des informations de ressources de capteur supprimées, signalées par le premier terminal mobile (61) ; suite à la réception des informations de ressources de capteur, à mettre à jour la liste de ressources de capteur propre à ce dernier, et ensuite à diffuser la liste de ressources de capteur mise à jour à la totalité des terminaux mobiles esclaves (61, 62) ;
le premier terminal mobile (61) est en outre configuré de manière à signaler des informations de ressources de capteur nouvellement acquises, et/ou des informations de ressources de capteur supprimées, au terminal mobile hôte (63), et à recevoir la liste de ressources de capteur mise à jour diffusée par le terminal mobile hôte (63) ; et
le second terminal mobile (62) est en outre configuré de manière à recevoir la liste de ressources de capteur mise à jour diffusée par le terminal mobile hôte (63).
